# EUROPÄISCHE PATENTSCHRIFT

(11) **EP 1 051 576 B1**
(45) Veröffentlichungstag und Bekanntmachung des Hinweises auf die Patenterteilung: **27.08.2003**
(21) Anmeldenummer: 99966910.4
(22) Anmeldetag: 01.12.1999
(51) Int. Cl.: F16H 57/10

(54) **GETRIEBEBAUEINHEIT**
TRANSMISSION STRUCTURAL UNIT
COMPOSANT DE TRANSMISSION

(30) Priorität: 03.12.1998 DE 19855759
(43) Veröffentlichungstag der Anmeldung: 15.11.2000
(73) Patentinhaber: Voith Turbo GmbH & Co. KG, 89522 Heidenheim (DE)
(72) Erfinder: KÖRNER, Tillman, D-89551 Zang (DE); SCHIEDER, Achim, Paul, D-92703 Krummenaab (DE)
(74) Vertreter: Dr. Weitzel & Partner
(86) Internationale Anmeldenummer: EP9909319
(87) Internationale Veröffentlichungsnummer: WO00036319

(56) Entgegenhaltungen:
- US-A- 3 475 992
- US-A- 4 102 444
- US-A- 4 446 758
- BUCKSCH M: "ZF-5-GANG-AUTOMATGETRIEBE FUER PKW (5HP 18)" VDI BERICHTE,DE,DÜSSELDORF, Nr. 878, 1991, Seiten 189-200, XP000901791 ISSN: 0083-5560 in der Anmeldung erwähnt
- KLEMENT W: "DIE ENTWICKLUNG DER VOITH-DIWA-GETRIEBE" VERKEHR UND TECHNIK,DE,ERIC SCHMIDT VERLAG, BIELEFELD, Bd. 40, Nr. 7, 1987, Seiten 301-303, XP000874413 ISSN: 0340-4536 in der Anmeldung erwähnt
- GEORG NITESCU: "Viergangplanetengetriebe für Personendkraftwagen mit dem hydrodynamischen Drehmomentwandler in Leistungsverzweigung" AUTOMOBIL-INDUSTRIE,Mai 1985 (1985-05), XP000874737 in der Anmeldung erwähnt

## Beschreibung

Die Erfindung betrifft eine Getriebebaueinheit im einzelnen mit den Merkmalen aus dem Oberbegriff des Anspruches 1.

Getriebebaueinheiten sind in einer Vielzahl von Ausführungen bekannt. Diese können als
a) mechanische Getriebebaueinheit
b) hydrodynamisch-mechanisches Verbundgetriebebaueinheit
ausgeführt sein. Hydrodynamisch-mechanische Verbundgetriebebaueinheiten sind beispielsweise aus den folgenden Druckschriften bekannt:
- Buksch, M.: ZF-Fünfgang-Automatgetriebe für Pkw, VDI-Bericht 878 (1991)
- Mitesko, G.: Viergang-Planetengetriebe für Personenkraftwagen mit dem hydrodynamiscen Drehmomentenwandler in der Leistungsverzweigung, Automobilindustrie (1995) 5, Seite 597 - 691
- Klement, W.: Die Entwicklung der DIWA-Getriebe; Verkehr und Technik (1997) 7, Seite 301 - 303

Die Getriebebaueinheiten, welche entweder nur rein mechanische Übertragungskomponenten besitzen oder aber auch aus einer Kombination eines hydrodynamischen Wandlers oder einer hydrodynamischen Kupplung mit einem nachgeschalteten mechanischen Getriebesatz bestehen, weisen in der Regel ein Gehäuse auf, welches hinsichtlich seiner Innenkontur der Gestaltung und Anbindung an das Gehäuse der einzelnen Getriebeelemente angepaßt ist und besitzen in der Regel Inneneinsätze, die den Innendurchmesser unerwünscht reduzieren. Beispielsweise nutzt ein bekanntes Getriebe eine Auffädelung der Getriebeelemente an sechs Stangen, welche dem Innenraum des Getriebes in gleichmäßigen Abständen in Umfangsrichtung zugeordnet sind. Dies ermöglicht zwar eine sehr einfache Montage der Bauelemente bzw. Getriebeelemente, allerdings reduziert die Anordnung der sechs Stäbe in Umfangsrichtung bezogen auf die Innenkontur der Getriebebaueinheit mit gleichbleibendem Abstand zwischen zwei einander benachbarten Stangen sowie die Anzahl dieser Stangen den Innendurchmesser des Getriebes erheblich, da die in Einbaulage oberen Stangen die Bauhöhe und damit auch den möglichen nutzbaren Planetendurchmesser bestimmen. Eine derartig gattungemäße Getriebebaueinheit ist ferner aus der Druckschrift US-PS 3, 475, 992 bekannt. Auch hier erfolgt die Auffädelung der Getriebeelemente an Stangen, welche dem Innerraum des Getriebes in gleichmäßigen Abständen in Umfangsrichtung zugeordnet sind. Aufgrund der Anordnungen in Umfangsrichtung ist bei der Auslegung der Getriebebaueinheit, insbesondere des Gehäuses der dafür benötigte Bauraum in radialer Richtung mit zu berücksichtigen. Auch hier reduziert die Anordnung der stabförmigen Führungselemente den für die Getriebeelemente nutzbaren Innendurchmesser erheblich.

Der Erfindung liegt daher die Aufgabe zugrunde, eine Möglichkeit der Gestaltung von Getriebebaueinheiten, insbesondere Getriebegehäusen, zu schaffen, bei welcher bei fest vorgegebenen Einbaumaßen möglichst große Momente übertragen werden können. Im einzelnen ist dabei auf eine Reduzierung des konstruktiven und vor allem fertigungstechnischen Aufwandes sowie eine Minimierung der erforderlichen Bauteilanzahl abzustellen.

Die erfindungsgemäße Lösung der Aufgabe ist durch die Merkmale des Anspruches 1 charakterisiert. Vorteilhafte Ausgestaltungen sind in den Unteransprüchen beschrieben.

Erfindungsgemäß weist die Getriebebaueinheit, welche ein Getriebegehäuse umfaßt und einen im wesentlichen zylindrischen Innenraum aufweist, wenigstens zwei stabförmige Elemente zur Anbindung von Getriebeelementen in radialer Richtung bezogen auf die Getriebeachse bzw. in Umfangsrichtung auf. Die stabförmigen Führungselemente erstrecken sich dabei im wesentlichen über einen Bereich, in welchem die zur Anbindung vorgesehenen Getriebeelemente angeordnet sind. Die stabförmigen Führungselemente sind dem zylindrischen Innenraum zugeordnet und in einem Bereich außerhalb von diesem angeordnet, wobei die Zuordnung derart erfolgt, daß die stabförmigen Führungselemente außerhalb eines Bereiches vorgesehen werden, welcher in Einbaulage des Getriebes betrachtet der größten Abmessung des Innenraumes in Höhenrichtung der Getriebebaueinheit entspricht.

Dies bedeutet, daß keines der Führungselemente in Einbaulage oberhalb der größten Abmessung in Höhenrichtung des Innenraumes im Getriebegehäuse angeordnet wird, sondern in den ehedem materialintensiveren Bereichen des Getriebegehäuses bei im wesentlichen viereckiger Getriebeaußenkontur mit zylindrischen Innenraum.

Unter einem weiteren Aspekt der Erfindung erfolgt dabei eine Anordnung der stabförmigen Führungselemente gegenüber dem zylindrischen Innenraum in einem Bereich, welcher durch die Einbaulagen in Höhenrichtung betrachtet minimalste und größte Abmessung des zylindrischen Innenraumes begrenzt wird. Das heißt, daß eine Anordnung direkt oberhalb der größten Abmessung in Höhenrichtung oder unterhalb der niedrigsten Abmessung des zylindrischen Innenraumes in Höhenrichtung, d. h. auf der in Höhenrichtung verlaufenden Symetrielinie des zylindrischen Innenraumes in Einbaulage betrachtet nicht erfolgt. Dies bietet den Vorteil, daß das Gehäuse in Höhenrichtung relativ baut und daher den zunehmend erhöhten Anforderungen an die Ausnutzung des zur Verfügung stehenden Bauraumes optimal gerecht wird.

Mit der erfindungsgemäßen Lösung läßt sich somit der Innendurchmesser bzw. die Innenkontur des Getriebegehäuses merklich größer gestalten bei gleichbleibendem Einbaumaßen für die Getriebebaueinheit. Durch die Führung der stabförmigen Führungselemente in den Ausnehmungen, welche mit dem zylindrischen Innenraum verbunden sind, kann der zylindrische Innenraum vollständig von den Getriebeelementen hinsichtlich ihrer radialen Erstreckung ausgenutzt werden. Beispielsweise bei Ausführung der Getriebeelemente als Lamellenkupplung kann die durch die Querschnittsfläche des Innenraumes beschreibbare Fläche vollständiger als möglich nutzbare Reibfläche verwendet werden. Da die stabförmigen Führungselemente nicht mit dem Innenraum kollidieren, können auch die anderen rotierenden Getriebeelemente, beispielsweise Planetenradsätze, derart ausgelegt werden, daß der gesamte Innenraum in radialer Richtung vollständig ausgenutzt wird. Dies führt dazu, daß durch die Durchmessersteigerung bei gleicher Baulänge ein größeres Drehmoment übertragen werden kann. Auf zusätzliche Inneneinsätze zur Lagerung, welche den Durchmesser des Innenraumes verringern, kann verzichtet werden. Die Aufhängung an den stabförmigen Führungselementen verhindert eine Verdrehung der einzelnen Getriebeelemente in Umfangsrichtung und begrenzt zusätzlich die Bewegbarkeit in radialer Richtung bezogen auf die Getriebeachse.

Zwingend erforderlich sind lediglich zwei stabförmige Elemente, erforderlich sind höchstens vier und vorzugsweise werden vier stabförmige Führungselemente eingesetzt. Die Anordnung erfolgt in diesem Fall im Querschnitt des Getriebegehäuses betrachtet in den Eckenbereichen, welcher sich durch die Schnittmenge zwischen dem zylindrischen Innenraum und einem theoretisch erzeugbaren Quadrat Q_{theoretisch} mit einer Seitenabmessung größer oder gleich dem Durchmesser des Innenraumes beschreibbar ist, wobei das theoretisch erzeugbare Quadrat Q_{theoretisch} und der Innenraum identische Symmetrieachsen aufweisen. In diesem Fall werden insbesondere bei einem rechteckigen Gehäuse mit zylindrischem Innenraum die materialintensiven Eckenbereiche zur Aufnahme der Führungselemente genutzt. Die Führungselemente sind dabei in Ausnehmungen geführt, welche mit dem zylindrischen Innenraum verbunden sind. Vorzugsweise erfolgt die Anordnung der Führungselemente jedoch immer symmetrisch. Dies bietet den Vorteil, daß der Fertigungsaufwand für die Getriebeelemente und das Getriebegehäuse minimiert werden kann, des weiteren der Montageaufwand, da nicht darauf geachtet werden muß, wie die einzelnen Ausnehmungen bzw. die Durchgangsöffnungen an den Getriebeelementen zur Aufnahme der Führungselemente gestaltet werden müssen. Auch kann der Gehäusegrundkörper mit den Ausnehmungen unabhängig von der späteren tatsächlichen Einbaulage gefertigt werden.

Als Getriebeelemente können beispielsweise Bremseinrichtungen in Form von Lamellenbremsen, Zwischenwände, Betätigungselemente für Brems- oder Kupplungseinrichtungen, beispielsweise in Form von Zylindern, Kolben oder Zylinderkolbeneinheiten, Lamellenträger oder ähnliches angesehen werden.

Die stabförmigen Elemente weisen vorzugsweise über ihre axiale Erstreckung einen gleichen bzw. konstanten Durchmesser auf. Dies bietet den Vorteil, daß die Montage unabhängig von der Einbaurichtung der stabförmigen Elemente erfolgen kann. Denkbar ist jedoch auch, je nach Gestaltung der Gesamtgetriebebaueinheit die Verwendung von stabförmigen Elementen mit unterschiedlichem Durchmesser über die axiale Erstreckung. In diesem Fall wird jedoch in der Regel eine Montage von zwei Seiten erfolgen.

Unter stabförmigen Elementen werden dabei Führungselemente verstanden, deren Profil als Voll- oder Hohlprofil ausgebildet ist, oder eine Kombination aus beiden darstellt.

Die Führungselemente können des weiteren je nach Anbindung als Welle oder Achse fungieren.

Beispielsweise ist es auch denkbar, ein Führungselement als Hohlachse auszuführen, welche z. B. eine Welle zum Antrieb von Nebenaggregaten oder eine Achse umschließt.

Der Querschnitt des stabförmigen Führungselementes ist vorzugsweise kreisrund. Es sind jedoch auch Ausführungen mit viereckigem Querschnitt oder beliebigem Querschnitt denkbar.

Bezüglich der Lagerung der stabförmigen Führungselemente können folgende Varianten angewendet werden:
a) Lagerung am Gehäuse in Gehäusewandvorsprüngen, beispielsweise am Gehäuseanfang und/oder Gehäuseende
b) Lagerung in Zwischenwänden, welche auf die Führungselemente aufgefädelt werden
c) Fliegende Lagerung an einem Wandvorsprung oder einer Zwischenwand, beispielsweise an den Stirnseiten des Getriebes, z. B. über Deckel
d) Lagerung über Wandvorsprünge (Nasen)

Die Getriebebaueinheit kann als rein mechanische Getriebebaueinheit ausgeführt sein. In diesem Fall erstreckt sich jedes stabförmige Führungselement vorzugsweise über die gesamte axiale Erstreckung der Getriebebaueinheit. Bei Ausführung der Getriebebaueinheit als hydrodynamisch-mechanisches Verbundgetriebe ist das stabförmige Führungselement wenigstens mit einer axialen Länge versehen, welche der axialen Erstreckung des mechanischen Getriebeteils, bezogen auf die Gesamtgetriebebaueinheit, entspricht. Es ist jedoch immer erforderlich, daß die axiale Erstreckung der Führungselemente der axialen Erstreckung der an diesem sich abzustützenden Getriebeelement entspricht

Eine weitere Möglichkeit der Lagerung der stabförmigen Elemente besteht darin, den Gehäusedeckel zu nutzen. In den besonders bevorzugten Ausführungsformen wird jedoch auf diese Möglichkeit verzichtet, um den Gehäusedeckel von Kräften, insbesondere Axialkräften, freizuhalten.

In einer besonders bevorzugten Getriebebaueinheit werden auch Vorrichtungen zur Rückstellung von Betätigungselementen der Lamellenbrems- und/oder Kupplungseinrichtungen durch die stabförmigen Führungselemente geführt. Zwischen den beiden reibflächentragenden Elementen, welche über ein reibflächentragendes Zwischenelement miteinander mittelbar durch Reibschluß koppelbar sind, ist wenigstens eine Federspeichereinrichtung vorgesehen, welche ebenfalls über die stabförmigen Führungselemente geführt wird und derart ausgelegt ist, daß bei Erzeugung des Reibschlusses zwischen den reibflächentragenden Elementen und dem Zwischenelement die Federspeichereinrichtung vorspannbar ist. Unter reibflächentragenden Elementen werden dabei die Elemente verstanden, welche über ein Zwischenelement miteinander koppelbar sind. Jeweils ein reibflächentragendes Element und ein reibflächentragendes Zwischenelement bilden bei Anpressung ein Reibflächenpaar. Unter Reibfläche wird dabei die Fläche bzw. der Flächenbereich verstanden, welcher am Reibschluß beteiligt ist. Die Reibfläche kann dabei Bestandteil des reibflächentragenden Elementes bzw. Zwischenelementes sein oder diesem als separates Element, z. B. in Form eines Belages, zugeordnet sein. Die Reibfläche bzw. die als Reibfläche fungierenden Flächenbereiche von reibflächentragendem Element bzw. Zwischenelement können des weiteren durch Beschichtung oder Oberflächenbehandlung erzeugt werden. Die Funktion von reibflächentragenden Elementen kann dabei sowohl von den Außen- als auch von den Innenlamellen übernommen werden. Aufgrund der Wirkung der Federspeichereinheit zwischen den einzelnen reibflächentragenden Elementen wirkt bei Entspannung des Betätigungselementes jeweils eine entgegengesetzt gerichtete Kraft auf die reibflächentragenden Elemente, so daß eine schnelle Trennung unter vollständiger Auflösung des Reibschlusses möglich wird. Die Federspeichereinrichtungen wirken somit mittelbar über die reibflächentragenden Elemente auf das Betätigungselement. Das Betätigungselement selbst kann beispielsweise als Kolben ausgeführt sein, der vorzugsweise hydraulisch oder pneumatisch beaufschlagt werden kann. Diese Möglichkeit der Anordnung der Federspeichereinheiten zwischen den reibflächentragenden Elementen bietet den Vorteil, daß die Abmessungen der reibflächentragenden Elemente in radialer Richtung nicht mehr durch die Größe der Innenabmessungen des Getriebegehäuses unter Berücksichtigung des erforderlichen Bauraumes für die Vorrichtung zur wenigstens mittelbaren Rückstellung von Betätigungselementen abhängig ist. Die Anordnung von Federspeichereinheiten zwischen den reibschlüssig über ein Zwischenelement miteinander verbindbaren reibflächentragenden Elementen bietet auch den Vorteil einer platzsparenden Ausführung der Rückstellvorrichtung, insbesondere des Kolbens einer Zylinder-/Kolbeneinheit in axialer Richtung, welche sich wiederum auf die Getriebelänge beim Einsatz der Bremseinrichtungen in Lamellenbauart in einem Getriebe niederschlägt. Bezüglich der Anordnung der Federeinheiten zwischen den reibflächentagenden Elementen sind eine Vielzahl von Möglichkeiten denkbar:
a) Anordnung von Federeinheiten zwischen jedem der beiden benachbarten reibflächentragenden Elementen;
b) Anordnung der Federeinheiten in Kraftflußrichtung zwischen den reibflächentragenden Elementen im Bereich der Krafteinleitung (im Bereich der jeweils außenliegenden reibflächentragenden Elemente bezogen auf die Einbaulage der Bremseinrichtung in einer Getriebebaueinheit);
c) Anordnung der Federeinheit zwischen zwei einander benachbarten reibflächentragenden Elementen bezogen auf die axiale Erstreckung der Bremseinrichtung im Mittenbereich dieser;
d) Anordnung gemäß b) in Kombination mit c);
e) Anordnung von Federeinheiten entsprechend den in a) bis d) beschriebenen Möglichkeiten;
f) Kombination e) mit den Möglichkeiten a) bis d);

Als Federspeichereinheiten finden vorzugsweise Federelemente Verwendung, welche eine Kennliniencharakteristik mit einem im wesentlichen konstanten Kraftverlauf über einen bestimmten Federweg aufweisen. Vorzugsweise werden daher Tellerfedern verwendet. Die Ausführung der Federeinheiten als Wellenfederring ist ebenfalls denkbar. Die verwendeten Betätigungseinrichtungen können als Zylinderkolbeneinrichtungen ausgeführt werden, welche hydraulisch oder pneumatisch beaufschlagbar sind. Entsprechend der Anordnung des Kolbens für die Rückstellvorrichtung über die reibflächentragenden Elemente, insbesondere Lamellen am Kolben, entweder im Bereich der Kolbenfläche oder außerhalb der Kolbenfläche wirksam. Hinsichtlich der Gestaltung des Kolbens werden Ausführungen mit
a) einem Kolben
b) einer Vielzahl von Kolben

unterschieden. Die zugehörigen Zylinder können dabei von einem zylindertragenden Element oder einer Vielzahl von zylindertragenden Elementen gebildet werden. Diese Möglichkeit der Kolbenrückstellung bietet den Vorteil eines minimalen Bauraumbedarfes in radialer sowie axialer Richtung. In Kombination mit der erfindungsgemäßen Lösung ist die Möglichkeit der Schaffung einer Getriebebaueinheit mit der Möglichkeit hoher Momentenübertragung bei gleichbleibender Baugröße oder verringerter Baugröße gegeben.

Die erfindungsgemäße Lösung wird nachfolgend anhand von Figuren erläutert. Darin ist folgendes dargestellt:
- Fig. 1a: verdeutlicht anhand eines Schemas den Einsatz in einem speziellen Getriebetyp;
- Fig. 1b: verdeutlicht eine konstruktive Ausführung für das in Fig. 1a dargestellte Schema;
- Fig. 2: zeigt eine mögliche Ansicht von rechts auf den Getriebetyp entsprechend Fig. 1.

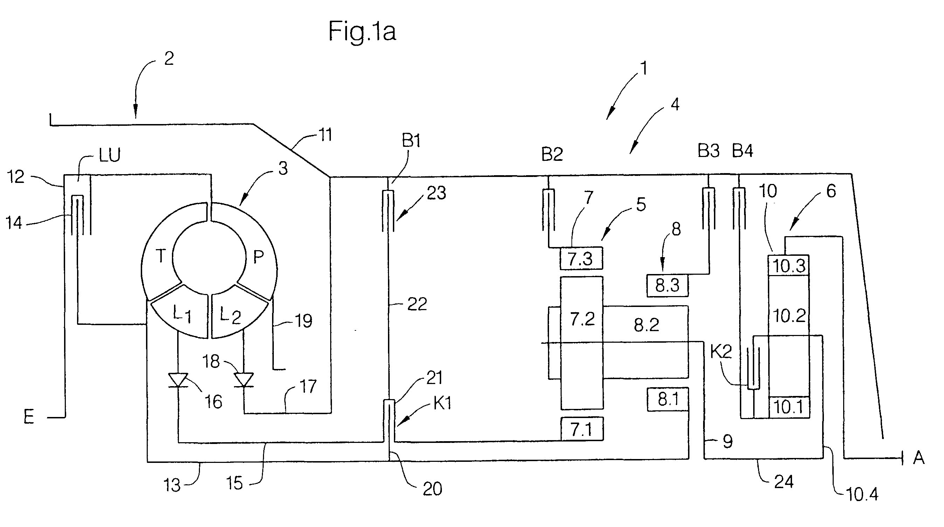

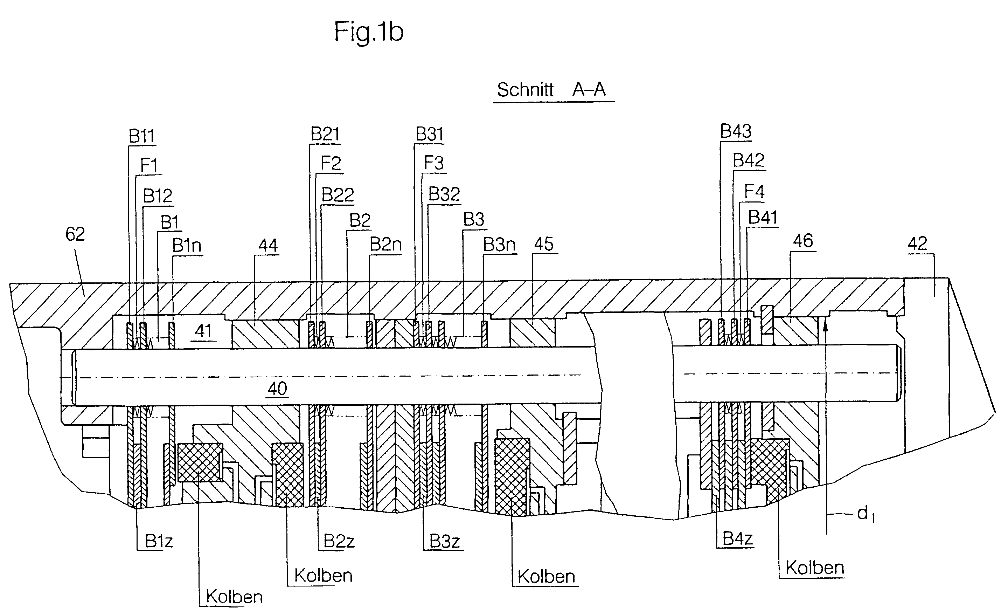

Die Figur 1 verdeutlicht beispielhaft anhand eines bestimmten Getriebetyps im Axialschnitt die erfindungsgemäße Lösung. Die Getriebebaueinheit ist als hydrodynamisch-mechanisches Verbundgetriebe 1 ausgeführt.

Das hydrodynamisch-mechanische Verbundgetriebe 1 umfaßt einen ersten hydrodynamischen Getriebeteil 2 in Form eines hydrodynamischen Drehzahl/Drehmomentenwandlers 3 und einen zweiten mechanischen Getriebeteil 4. Der mechanische Getriebeteil 4 umfaßt einen mechanischen Drehzahl/Drehmomentenwandler 5 und einen, diesem in Kraftflußrichtung im Traktionsbetrieb nachgeschalteten Gruppensatz. Der mechanische Drehzahl/Drehmomentenwandler 5 ist als abgewandelter Ravigneaux-Planetenradsatz ausgeführt. Dieser umfaßt einen ersten Planetenradsatz 7 und einen zweiten Planetenradsatz 8, welche einen gemeinsam genutzten Planetenradträger 9 aufweisen. Dieser stellt die Kopplung zwischen einem Getriebeelement des ersten und des zweiten Planetenradsatzes dar. Der erste Planetenradsatz 7 umfaßt ein Sonnenrad 7.1, Planetenräder 7.2 und ein Hohlrad 7.3. Der zweite Planetenradsatz 8 umfaßt ein Sonnenrad 8.1, Planetenräder 8.2 und ein Hohlrad 8.3.

Der Gruppensatz 6 umfaßt wenigstens einen Planetenradsatz 10, welcher ein Sonnenrad 10.1, Planetenräder 10.2, ein Hohlrad 10.3 und einen Steg 10.4 aufweist.

Der hydrodynamisch-mechanische Drehzahl-/Drehmomentenwandler 3 umfaßt ein Turbinenrad T, ein Pumpenrad P, ein erstes Leitrad L1 und ein zweites Leitrad L2 und ist durch ein Gehäuse 11 abgedeckt. Das Pumpenrad P ist mit einer Getriebeeingangswelle E, welche wenigstens mittelbar mit einer, dem Antrieb dienenden Antriebsmaschine koppelbar ist, vorzugsweise mit einem Schwungrad 12 einer Verbrennungskraftmaschine derart verbunden, daß die Kraft vom Schwungrad 12 auf das Pumpenrad P übertragen wird. Das Turbinenrad T ist mit einer Turbinenradwelle 13 drehfest verbunden. Um die Vorteile der hydrodynamischen Drehmomentenübertragung mit Überbrückungskupplung zu nutzen, welche im folgenden wären:
- selbsttätige stufenlose Einstellung des Verhältnisses zwischen der Anund Abtriebsdrehzahl entsprechend der Belastung auf der Abtriebsseite
- Zurverfügungstehen des maximalen Drehmomentes für einen Anfahrvorgang mit hoher Beschleunigung;
- Möglichkeit der Wärmeabfuhr durch Fremd- oder Oberflächenkühlung
- Trennung des hydrodynamischen Drehzahl-/Drehmomentenwandlers vom Abtrieb, insbesondere vom Fahrzeug bei kleinen Antriebsdrehzahlen und Übertragung eines geringen Restmomentes, so daß ein Abwürgen der Antriebsmaschine von der Abtriebsseite her nicht möglich ist
- verschleißfreie Leistungsübertragung
und gleichzeitig die Nachteile einer hydrodynamischen Leistungsübertragung, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen, die übertragbare Gesamtleistung vermindern und die erzielten Wandlungsbereiche für den Fahrzeugeinsatz oft nicht ausreichend sind, wird der hydrodynamische Drehzahl/Drehmomentenwandler 3 nur in den unteren Gangstufen, vorzugsweise nur während des Anfahrvorganges, zur Leistungsübertragung genutzt. Zur Verbesserung des Übertragungswirkungsgrades wird daher der hydrodynamische Drehzahl-/Drehmomentenwandler 3 aus der Leistungsübertragung herausgenommen, vorzugsweise durch Überbrückung.

Zu diesem Zweck ist zwischen dem Turbinenrad T und dem Schwungrad 12 bzw. der Getriebeeingangswelle eine Überbrückungskupplung 14 angeordnet.

Das erste Leitrad L1 ist auf der Turbinenseite zwischen dem Turbinenrad T und dem Pumpenrad P angeordnet und durch einen Freilauf gelagert. Das erste Leitrad L1 ist mit einer ersten Leitradwelle 15 drehfest verbindbar, wobei zwischen dem ersten Leitrad L1 und der Leitradwelle 15 ein Freilauf 16 vorgesehen ist, welcher derart ausgelegt wird, daß er ein Moment auf die erste Leitradwelle 15 überträgt, wenn sich das erste Leitrad L1 in umgekehrter Richtung, d.h. entgegengesetzter Drehrichtung, zum Turbinenrad T dreht und welcher leerläuft, wenn das erste Leitrad L1 in normaler Richtung, d.h. in gleicher Rotationsrichtung wie das Turbinenrad T rotiert. Das zweite Leitrad L2 ist zwischen dem Turbinenrad T und dem Pumpenrad P auf der Pumpenseite angeordnet und über eine zweite Leitradwelle 17 mit dem Gehäuse 11 koppelbar. Zwischen dem zweiten Leitrad L2 und der zweiten Leitradwelle 17 ist ein zweiter Freilauf 18 angeordnet, mittels welchem das zweite Leitrad L2 mit der zweiten Leitradwelle 17 gekoppelt werden kann, jedoch nur dann, wenn sich das zweite Leitrad L2 in entgegengesetzter Richtung zum Turbinenrad T dreht.

Das Pumpenrad P ist mit einer Pumpenradwelle 19 drehfest verbunden, welche über ein Lager im Gehäuse 11 drehbar gelagert ist.

Zur Realisierung der einzelnen Gangstufen und Auslegung der einzelnen Gänge sind den einzelnen Elementen des hydrodynamisch-mechanischen Verbundgetriebes 1 Schaltelemente zugeordnet. Zwischen dem hydrodynamischen Getriebeteil 2 und dem mechanischen Getriebeteil 4 sind eine erste Kupplungseinrichtung K1 und eine erste Bremseinrichtung B1 vorgesehen.

Das Turbinenrad T und die mit diesem drehfest koppelbare Turbinenradwelle 13 ist mit dem Sonnenrad 8.1 des zweiten Planetenradsatzes 8 des mechanischen Drehzahl-/Drehmomentenwandlers 5 gekoppelt. Vorzugsweise sind das Turbinenrad T und das Sonnenrad 8.1 des zweiten Planetenradsatzes 8 auf einer gemeinsamen Welle, hier der Turbinenradwelle 13, angeordnet. die Turbinenradwelle 13 trägt dabei auch die Kupplungsscheibe 20 der ersten Kupplung K1. Die erste Kupplung K1 weist des weiteren eine Kupplungsscheibe 21 auf, welche mit der ersten Leitradwelle 15 gekoppelt ist. Des weiteren ist das erste Leitrad L1 über die erste Leitradwelle 15 mit dem Sonnenrad 7.1 des ersten Planetenradsatzes 7 des mechanischen Drehzahl-/Drehmomentenwandlers 5 verbindbar. Die Kupplungsscheibe 21 ist mit der ersten Leitradwelle 15 verbunden. Die erste Leitradwelle 15 ist als Hohlwelle ausgeführt, welche die Leitradwelle 13 in Umfangsrichtung umschließt.

Mit der Kupplungsabdeckung 21 der ersten Kupplung K1 ist ein vorzugsweise scheibenförmiges Element 22 verbunden und bildet mit dieser eine bauliche Einheit, an deren äußerem Umfangsbereich 23 die erste Bremseinrichtung B1 angreifen kann. Die erste Bremseinrichtung B1 dient dabei zum Festsetzen des ersten Leitrades L1 über die Leitradwelle 15 und/oder des ersten Sonnenrades 7.1 des ersten Planetenradsatzes 7 des mechanischen Drehzahl-/Drehmomentenwandlers 5. Weitere Schaltelemente, hier die Schaltelemente in Form von Bremseinrichtungen B2 und B3, sind den einzelnen Planetenradsätzen 7 bzw. 8 des mechanischen Drehzahl/Drehmomentenwandlers 5 zugeordnet. Im dargestellten Fall ist das zweite Bremselement B2 dem Hohlrad 7.3 des ersten Planetenradsatzes 7 und das dritte Bremselement B3 dem Hohlrad 8.3 des zweiten Planetenradsatzes 8 des mechanischen Drehzahl-/Drehmomentenwandlers 5 zugeordnet. Die Kopplung des mechanischen Drehzahl-/Drehmomentenwandlers 5 mit der Getriebeeingangswelle E über den hydrodynamischen Drehzahl/Drehmomentenwandter 3 bzw. dessen Überbrückung über die Überbrückungskupplung 14 erfolgt dabei durch Kopplung des Turbinenrades T bzw. der Turbinenradwelle 13 mit einem ersten Getriebeelement des mechanischen Drehzahl-/Drehmomentenwandlers 5 und des ersten Leitrades L1 mit einem weiteren zweiten Getriebeelement des mechanischen Drehzahl-/Drehmomentenwandlers 5. Als erstes Getriebeelement des mechanischen Drehzahl-/Drehmomentenwandlers 5 fungiert hier das Sonnenrad 8.1 des zweiten Planetenradsatzes 8. Als zweites Getriebeelement fungiert das Sonnenrad 7.1 des ersten Planetenradsatzes 7. Die mit den beiden Sonnenrädern 7.1 bzw. 8.1 gekoppelten Wellen, hier die erste Leitradwelle 15 und die Turbinenradwelle 13, fungieren als Eingangswellen des mechanischen Drehzahl-/Drehmomentenwandlers 5. Ein weiteres drittes Getriebeelement ist über den Gruppensatz 6 mit der Getriebeausgangswelle A verbunden. Als drittes Getriebeelement fungiert der Planetenträger 9, welcher von beiden Planetenradsätzen 7 und 8 gemeinsam genutzt wird. Das dritte Getriebeelement des mechanischen Drehzahl/Drehmomentenwandlers 5 ist mit dem Eingang, welcher von einem ersten Getriebeelement des Gruppensatzes 6 gebildet wird, verbunden. Vorzugsweise wird diese Verbindung über eine drehfeste Kopplung vom dritten Getriebeelement des mechanischen Drehzahl/Drehmomentenwandlers 5 und ersten Getriebeelement des Gruppensatzes 6 realisiert. Beide sind vorzugsweise auf einer gemeinsamen Verbindungswelle 24 angeordnet. Das erste Getriebeelement des Gruppensatzes 6 wird von dessen Planetenträger 10.4 gebildet. Ein zweites Getriebeelement des Gruppensatzes 6 ist drehfest mit der Getriebeausgangswelle A des hydrodynamisch-mechanischen Verbundgetriebes 1 verbunden. Als zweites Getriebeelement fungiert im dargestellten Fall das Hohlrad 10.3 des Planetenradsatzes 10 des Gruppensatzes 6. Während der mechanische Drehzahl/Drehmomentenwandler 5 in Kombination mit dem hydrodynamischen Drehzahl-/Drehmomentenwandler 3 der Realisierung von drei Gangstufen dient, können durch Kombination des hydrodynamischen Drehzahl/Drehmomentenwandlers 3, des mechanischen Drehzahl/Drehmomentenwandlers 5 mit dem Gruppensatz 6 im dargestellten Fall sechs Gangstufen realisiert werden. Zu diesem Zweck sind dem Gruppensatz 6 jeweils eine weitere Kupplungseinrichtung, hier die zweite Kupplungseinrichtung K2 und eine weitere Bremseinrichtung, hier die vierte Bremseinrichtung B4, zugeordnet. Das vierte Bremselement dient dabei der Feststellung des Sonnenrades 10.1 des Gruppensatzes 6. Die zweite Kupplungseinrichtung K2 ermöglicht die starre Kopplung zwischen dem Planetenträger 10.4 und dem Sonnenrad 10.1 des Planetenradsatzes 10 des Gruppensatzes 6.

Aus dem in Fig. 1b dargestellten Ausschnitt aus einem möglichen Axialschnitt der Getriebebaueinheit 1 wird ersichtlich, wie einzelne Getriebeelemente, welche am Gehäuse befestigt oder gelagert werden, in der erfindungsgemäßen Art und Weise am Gehäuse 11 befestigt werden. Die einzelnen Bremseinrichtungen B1 bis B4 sind in Lamellenbauart ausgeführt.
Diese umfassen wenigstens jeweils zwei reibflächentragende Elemente, welche über ein reibflächentragendes Zwischenelement miteinander reibschlüssig verbunden werden. Die reibflächentragenden Elemente sind dabei für die einzelnen Bremseinrichtungen wie folgt bezeichnet:
B1: B₁₁, B₁₂, B₁ₙ
B2: B₂₁, B₂₂, B₂ₙ
B3: B₃₁, B₃₂, B₃ₙ
B4: B₄₁, B₄₂, B₄ₙ

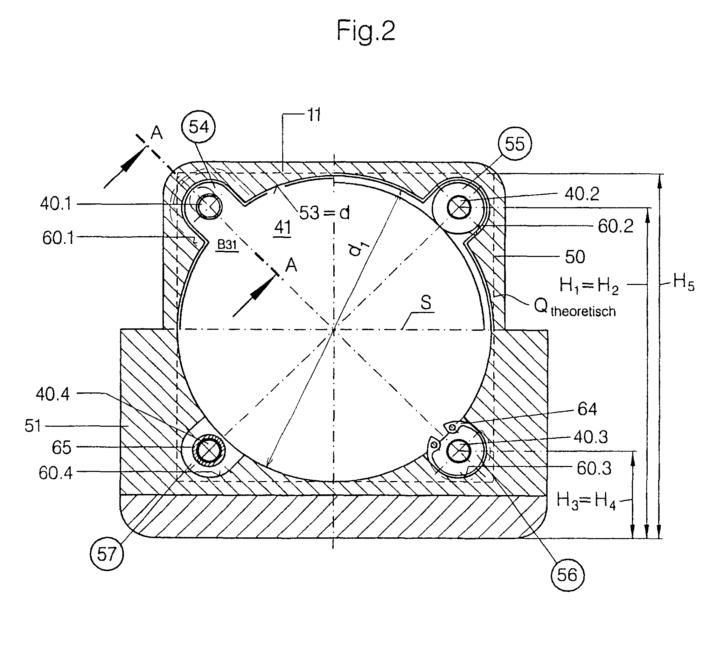

Die Zwischenelemente sind jeweils mit B_{1Z}, B_{2Z}, B_{3Z} und B_{4Z} bezeichnet. Die reibeflächentragenden Elemente B₁ₙ bis B₄ₙ bilden dabei die Außenlamellen. Die ortsfeste Festlegung der Außenlamellen erfolgt bei über die stabförmigen Führungselemente 40. Diese erstrecken sich vorzugsweise wenigstens über die axiale Erstreckung des mechanischen Getriebeteiles 4. Das Gehäuse 11 weist in diesem Abschnitt im wesentlichen über die axiale Erstreckung einen konstanten Innendurchmesser dₗ auf. Vorzugsweise sind, wie in der Fig. 2 dargestellt, vier stabfömige Führungselemente 40.1 bis 40.4 vorgesehen, welche beispielsweise mit gleichbleibendem Abstand in Umfangsrichtung zueinander im Getriebegehäuse 11 angeordnet sind. Das Getriebegehäuse 11 selbst ist beispielsweise wenigstens in dem Bereich, welcher den mechanischen Getriebeteil 4 aufnimmt, derart ausgestaltet, daß dieses einen im wesentlichen zylindrischen Innenquerschnitt aufweist. Vorzugsweise weist das Getriebegehäuse in axialer Richtung betrachtet im Bereich des mechanischen Getriebeteiles 4 einen im wesentlichen konstanten Innendurchmesser auf. Der Innendurchmesser ist derart ausgelegt, daß im wesentlichen die rotierenden Getriebelemente und Bauteile frei rotieren können unter Ausnutzung des maximal möglichen Bauraums. Das einzelne Führungselement 40 ist vorzugsweise einstückig ausgeführt, kann jedoch auch aus mehreren Teilstücken bestehen. Im unmontierten Zustand des mechanischen Getriebeteils 4 ist der Innenraum, welcher hier mit 41 bezeichnet ist, im wesentlichen leer. Zur Montage werden zuerst die stabförmigen Führungselemente in die entsprechenden Positionen verbracht bzw. in entsprechender Weise am Getriebegehäuse eingehangen und die einzelnen Getriebeelemente werden hintereinander entsprechend der gewünschten Anordnung auf diesen Führungselementen aufgefädelt. Alle Komponenten des mechanischen Getriebeteiles können von der Trennstelle T bis zum Gehäusedeckel 42 nacheinander bei der Montage aufgefädelt werden. Dies bietet den Vorteil, daß mit der Auffädeltechnik und dem konstanten Innendurchmesser die einzelnen Bauelemente im mechanischen Getriebeteil 4 untereinander vertauscht werden können und sich somit auf einfache Art und Weise bei gleichbleibendem Getriebegehäuse bzw. gleichen Abmessungen der Getriebebaueinheit Mittenabtriebe oder Allradabtriebe verwirklichen lassen. Die Montage erfolgt nur von einer Seite und zwar im dargestellten Fall von seiten des Deckels 42. Die Montage gestaltet sich einfach und ist innerhalb kürzester Zeit realisierbar. Die einzelnen Planetenradsätze können hinsichtlich ihrer Anordnung untereinander vertauscht werden. Des weiteren sind unterschiedliche Abtriebsvarianten realisierbar.

Die axiale Festlegung der einzelnen Getriebeelemente erfolgt dabei durch Sicherungsmittel, beispielsweise in Form von Sicherungsringen oder Anschlägen. Außer den Außenlamellen werden auch sogenannte Zwischenwände 44, 45, 46 und 47 geführt. Des weiteren erfolgt ebenfalls über die Führungselemente 40.1 bis 40.4 die ortsfeste Anordnung bzw. Abstützung von Getriebeelementen, beispielsweise Lamellenträgern oder ähnlichem.

Die Fig. 2 verdeutlicht einen Querschnitt entsprechend einer Ansicht A-A gemäß Fig. 1. Ersichtlich sind das Getriebegehäuse 11, welches im dargestellten Fall in zwei Teilbereiche 50 und 51 unterteilt werden kann. Der erste Teilbereich 50 bildet dabei den in Einbaulage oberen Gehäuseteil, der zweite Teilbereich 51 den in Einbaulage unterhalb der Getriebesymmetrieachse S angeordneten Gehäuseteil. Das Getriebegehäuse 11 weist, wie in den Ausführungen zu Fig. 1 bereits erläutert, eine im wesentlichen zylindrische Innenkontur 53 auf, welcher einen Innenraum 41 umschließt. Die Innenkontur 53 kann durch den Durchmesser dₗ beschrieben werden. Dieser erstreckt sich, wie in den Ausführungen zu Fig. 1 bereits ausführlich erläutert, im wesentlichen über die gesamte axiale Erstreckung des mechanischen Getriebeteiles 4. Es sind Mittel zur Aufnahme und Anbindung der Getriebetemente in radialer Richtung und zur Sicherung gegenüber Verdrehung in Umfangsrichtung zugeordnet. Diese Mittel werden von den Führungselementen 40.1 bis 40.4 gebildet. Diese sind dem durch den Durchmesser d, beschriebenen Innenumfang 53 derart zugeordnet, daß diese in Einbaulage der Getriebebaueinheit 1 auf einer Höhe H1 bis H4 angeordnet sind, welche bezüglich der Abmessungen kleiner der durch die maximale Erstreckung der Innenkontur 53 in Einbaulage in Höhenrichtung beschriebenen Abmessung H5 ist. Die Führungselemente sind daher, wie in der Fig. 2 verdeutlicht, in den Eckenbereichen 54, 55, 56 bzw. 57 des Gehäuses 11 angeordnet, wobei die Eckenbereiche sich durch eine Zuordnung eines Quadrates bzw. Rechteckes zur Innenkontur 53 beschreiben lassen. Die Eckenbereiche 54 bis 57 werden dabei in Einbaulage durch Zuordnung des Quadrates O_{theoretisch} beschrieben, in dem der von der Innenkontur 53 umschriebene Durchmesser dₗ in dem Quadrat angeordnet ist und beide, das theoretisch zur Betrachtung herangezogene Quadrat Q_{theoretisch} sowie der Innendurchmesser d der Innenkontur 53 des Gehäuses die gleichen Symmetrieachsen S1 bzw. S2 aufweist. Zur Aufnahme der Führungselemente sind entsprechende Ausnehmungen im Gehäuse vorgesehen. Diese sind hier für die einzelnen Führungselemente jeweils mit 60.1 bis 60.4 bezeichnet. Die Anordnung dieser Ausnehmungen 60.1 bis 60.4 im Gehäuse erfolgt dabei außerhalb eines Bereiche am Getriebegehäuse, welcher durch die maximale Erstreckung der Innenkontur von der jeweiligen Symmetrieachse in Höhen- bzw. Breitenrichtung der Getriebebaueinheit beschrieben wird. D. h., daß bei Verwendung einer im wesentlichen rechteckigen Gehäuseaußenform und einer im wesentlichen zylindrischen Gehäuseinnenkontur 53 nur die materialintensiven Eckenbereiche 54 bis 57 des Gehäuses 11 zur Aufnahme der Führungselemente 40.1 bis 40.4 genutzt werden. Zusätzlicher Bauraum in Höhen- oder Breitenrichtung wird nicht benötigt. Der Innenraum 41 kann mit maximal möglichen Durchmesser d, gestaltet werden, da in Höhen- und Breitenrichtung kein zusätzlicher Bauraum für die Anbindung der Getriebeelemente vorgesehen werden muß. Das Getriebegehäuse 11 selbst kann in den von den eingearbeiteten Ausnehmungen 60.1 bis 60.4 freien Bereichen mit relativ dünner Gehäusewand ausgestattet werden. Die Ausnehmungen 60.1 bis 60.3 bilden sogenannte Eingriffstaschen, in welche die Führungselemente 40.1 bis 40.4 eingeführt werden können. Vorzugsweise ist jeweils in axialer Richtung, wie in der Fig. 1 verdeutlicht, eine Möglichkeit zum Einhängen bzw. zur fliegenden Lagerung der Führungselemente 40.1 bis 40.4 vorgesehen. Diese ist in der Fig. 1 mit 62 bezeichnet. Zusäztlich können die Führungselemente auch in den Zwischenwänden, welche sich über den gesamten Innenraum in radialer Richtung erstrecken, geführt werden. Die Fig. 2 verdeutlicht beispielsweise die Anbindung des reibflächentragenden Elementes B₃₁. Für die Anbindung an den Führungselementen 40.1 bis 40.4 sind in der Fig. 2 vier mögliche Ausführungsvarianten schematische vereinfacht dargestellt. Vorzugsweise werden für die axiale Festlegung eines Elementes gleiche axiale Sicherungselemente verwendet. Am Führungselement 40.1 erfolgt die axiale Sicherung durch Verwenden von Einschiebeblechen, im Führungselement 40.3 mittels eines Sicherungsringes 64 und am Führungselement 40.4 durch Hülsen 65. Zum Auffädeln der einzelnen Getriebeelemente auf die stabförmigen Führungselemente 40.1 bis 40.4 weisen diese entsprechende Durchgangsöffnungen auf. Vorzugsweise sind die Getriebeelemente derart ausgeführt, daß diese zusätzlich zu ihrem kreisrunden Querschnitt Vorsprünge 63 aufweise, an welchen die Ausnehmungen bzw. Durchgangsöffnungen eingearbeitet sind. Dies bietet den Vorteil, daß der übrige Bauraum, insbesondere der zylindrische Innenraum 41 im wesentlichen voll ausgenutzt werden kann und keine zusätzlichen störenden Elemente enthält. Insbesondere bei Anbindung der Außenlamellen entsprechend der Fig. 2 kann zur Kraftübertragung eine Fläche genutzt werden, welche im wesentlichen der durch den Innendurchmesser d, beschreibbaren Fläche entspricht.

Vorzugsweise erfolgt die Anbindung der Getriebeelemente in allen vier möglichen Eckenbereichen 54 bis 57. Die Führungselemente 40.1 bis 40.4 und die entsprechenden Vorsprünge an den Getriebeelementen sind dementsprechend mit gleichbleibendem Abstand betrachtet in Umfangsrichtung bezogen auf die Innenkontur 53 der Getriebebaueinheit 1 angeordnet. Es besteht jedoch auch die Möglichkeit, eine im wesentlichen symmetrische Anordnung zu finden, welche von der Anordnung im Eckenbereich abweicht. Des weiteren ist es nicht zwingend erforderlich, eine Anbindung in allen vier Eckenbereichen vorzunehmen. Zur Verdrehsicherung in Umfangsrichtung sind wenigstens zwei Führungselemente erforderlich.

Vorzugsweise sind die Bremseinrichtungen B1 bis B4 mit einer Vorrichtung zur Rückstellung von Betätigungselementen ausgestattet. Zu diesem Zwecke sind jeweils zwischen zwei einander benachbarten reibflächentragenden Elementen eine Federspeichereinheit vorgesehen, welche ebenfalls von den Führungselementen, entsprechend Fig. 1 dem Führungselement 40.1 geführt und bei Erzeugung des Reibschlusses zwischen den Reibflächentragenden Elementen und dem Zwischenelement vorspannbar ist. Im dargestellten Fall sind zwischen den reibflächentragenden Elementen der Bremseinrichtung B1 eine Federspeichereinheit F1 bzw. B2, F2, B3 - F3 und B4, F4 vorgesehen. Die Federspeichereinheiten sind dabei immer außerhalb der reibflächentragenden Zwischenelemente angeordnet, so daß diesbezüglich keinerlei Kollision zwischen den Federspeichereinheiten und den reibflächentragenden Zwischenelementen auftreten kann. Vorzugsweise sind wenigstens zwischen den in Kraftflußrichtung ersten beiden einander benachbarten reibflächentragenden Elementen einer Bremseinrichtung entsprechende Federspeichereinrichtungen angeordnet. Diese Ausführung bietet den Vorteil, daß aufgrund der Wirkung der Federspeichereinheit zwischen den einzelnen reibflächentragenden Elementen auf diese jeweils entgegengesetzt gerichtete Kräfte wirken, so daß eine schnelle Trennung unter vollständiger Auflösung des Reibschlusses möglich wird. Die Federspeichereinrichtung wirkt somit wenigstens mittelbar über die reibflächentragenden Elemente auf das Betätigungselement, insbesondere einen Kolben. Die Betätigungselemente, d. h. die Kolben, können beispielsweise hydraulisch oder pneumatisch beaufschlagt werden. Die einzelnen reibflächentragenden Elemente und die Zwischenelemente müssen sich dann nicht mehr freikleiden. Es erfolgt immer eine Zwangstrennung zumindest in dem Bereich, in welchem die Federspeichereinheit angeordnet ist.

Die Anordnung der Federspeichereinheiten zwischen den einzelnen reibflächentragenden Elementen bietet des weiteren den Vorteil, daß die Abmessungen der reibflächentragenden Elemente in radialer Richtung nicht mehr durch die Größe der Innenabmessungen des Getriebgehäuses unter Berücksichtigung des erforderlichen Bauraumes für die Vorrichtung zur wenigstens mittelbaren Rückstellung von Betätigungselementen abhängig ist. Die Anordnung von Federspeichereinheiten zwischen den reibschlüssig über ein Zwischenelement miteinander verbindbaren reibflächentragenden Elementen bietet des weiteren den Vorteil einer platzsparenden Ausführung der Rückstellvorrichtung in axialer Richtung, welche sich wiederum auf die Getriebebaulänge positiv auswirkt.

Die erfindungsgemäße Lösung ist nicht auf eine Getriebetyp, wie in Fig. 1 beschrieben, begrenzt, bietet jedoch für diese Art von Getrieben eine besonders vorteilhafte Montagemöglichkeit, welche sich auch aufgrund der Austauschbarkeit einzelner Getriebeelemente in axialer Richtung betrachtet, in einer universellen Einsetzbarkeit eines bestimmten Grundgetriebetyps niederschlägt.

## Patentansprüche

1. Getriebebaueinheit (1)
mit einem Getriebegehäuse (11) und den folgenden Merkmalen:
das Getriebegehäuse weist einen im wesentlichen zylindrischen Innenraum (41) zur Aufnahme einzelner Getriebeelemente (B1, B2, B3, B4, K1, K2) auf;
es sind wenigstens zwei stabförmige Führungselemente (40.1, 40.2, 40.3, 40.4), welche sich in axialer Richtung betrachtet über wenigstens einen Teil der axialen Erstreckung des zylindrischen Innenraumes (41) erstrecken, vorgesehen, an welchen eine Vielzahl von Getriebeelementen (B1 - B4, 41, 42, 10, 7, 8) ortsfest gegenüber dem Gehäuse (11) lagerbar ist;
die stabförmigen Führungselemente (40.1, 40.2, 40.3, 40.4) sind in Ausnehmungen (60.1 - 60.4) im Getriebegehäuse (11), welche mit dem Innenraum (41) verbunden sind, angeordnet; **gekennzeichnet durch** die folgenden Merkmale:
die stabförmigen Führungselemente (40.1, 40.2, 40.3, 40.4) sind dem zylindrischen Innenraum (41) außerhalb eines Bereiches der in Einbaulage in Höhenrichtung betrachtet größten Abmessung (H5) des zylindrischen Innenraumes (41) zugeordnet;
das Getriebegehäuse (11) weist eine im wesentliche rechteckige Außenform auf und die Zuordnung der stabförmigen Führungselement (40.1, 40.2, 40.3, 40.4) zum zylindrischen Innenraum erfolgt in Eckenbereichen (54, 55, 56, 57), welche **durch** die Schnittmenge von Innenraum (41) und einem theoretisch bildbaren Quadrat (Q_{theoretisch}) mit einer Seitenabmessung größer oder gleich dem Durchmesser (d) des Innenraumes (41) beschreibbar ist, wobei das theoretische bildbare Quadrat (Q_{theoretisch}) und der Innenraum (41) identische Symmetrieachsen (S) aufweisen.

2. Getriebebaueinheit nach Anspruch 1, **dadurch gekennzeichnet, daß** die stabförmigen Führungselemente (40.1, 40.2, 40.3, 40.4) dem zylindrischen Innenraum (41) in einem Bereich zugeordnet sind, welcher durch die in Einbaulage in Höhenrichtung betrachtet kleinste und größte Abmessung des zylindrischen Innenraumes begrenzt wird.

3. Getriebebaueinheit nach Anspruch 1 oder 2, **dadurch gekennzeichnet, daß** die stabförmigen Führungselemente (40.1, 40.2, 40.3, 40.4) in allen vier Eckenbereichen (54, 55, 56, 57) mit im wesentlichen in Umfangsrichtung des zylindrischen Innenraumes (41) konstantem Abstand zueinander angeordnet sind.

4. Getriebebaueinheit nach einem der Ansprüche 1 bis 3, **dadurch gekennzeichnet, daß** die einzelnen an den stabförmigen Führungselementen (40.1, 40.2, 40.3, 40.4) geführten Getriebeelemente (B1 - B4, K1 - K4, 10, 7, 8) Vorsprünge mit Durchgangsöffnungen zur Aufnahme der stabförmigen Elemente aufweisen und derart gestaltet sind, daß diese von den Ausnehmungen (60.1 - 60.4) im Getriebegehäuse (11) aufgenommen werden.

5. Getriebebaueinheit nach einem der Ansprüche 1 bis 4, **dadurch gekennzeichnet, daß** Mittel vorgesehen sind, welche die Bewegbarkeit der Getriebeelemente (B1, Bn, K1 - Kn, 10, 7, 8) in axialer Richtung begrenzen.

6. Getriebebaueinheit nach Anspruch 5, **dadurch gekennzeichnet, daß** die Mittel Sicherungsringe (64) umfassen.

7. Getriebebaueinheit nach Anspruch 4 oder 6, **dadurch gekennzeichnet, daß** die Mittel hülsenförmige Elemente (65) umfassen.

8. Getriebebaueinheit nach einem der Ansprüche 4 bis 7, **dadurch gekennzeichnet, daß** die Mittel Anschlagflächen umfassen, welche von einzelnen Getriebeelementen gebildet werden.

9. Getriebebaueinheit nach einem der Ansprüche 1 bis 8, **dadurch gekennzeichnet, daß** der Innendurchmesser (d) des zylindrischen Innenraumes (41) im wesentlichen konstant ist.

10. Getriebebaueinheit nach einem der Ansprüche 1 bis 8, **gekennzeichnet durch** die folgenden Merkmale:
10.1. mit einem mechanischen Getriebeteil (4) und einem hydrodynamischen Getriebeteil (2);
10.2 der zylindrische Innenraum (41) des Getriebegehäuses (11) weist in axialer Richtung betrachtet wenigstens über dem Bereich des mechanischen Getriebeteiles (4) einen konstanten Durchmesser (d) auf.

11. Getriebebaueinheit nach einem der Ansprüche 1 bis 9, **gekennzeichnet durch** die folgenden Merkmale:
11.1 wenigstens ein Getriebeelement ist als Zwischenwand (44, 45, 46, 62) ausgeführt;
11.2 die stabförmigen Führungselemente (40.1 - 40.4) sind in den Zwischenwänden (44, 45, 46, 62) gelagert.

12. Getriebebaueinheit nach einem der Ansprüche 1 bis 10, **dadurch gekennzeichnet, daß** die stabförmigen Führungselemente (40.1 - 40.4) wenigstens im Getriebegehäuse (11) fliegend gelagert sind.

13. Getriebebaueinheit nach einem der Ansprüche 1 bis 12, **gekennzeichnet durch** die folgenden Merkmale:
13.1 es ist wenigstens ein Getriebeelement in Form einer Lamellenbremseinrichtung (B1 - B4) vorhanden, umfassend wenigstens zwei reibflächentragende Elemente (B1n - Bnn), deren Reibflächen über ein weiteres reibflächentragendes Zwischenelement (Bz1 - Bzn)aneinander anpreßbar sind;
13.2 zwischen wenigstens zwei einander benachbarten reibflächentragenden Elementen (B1n, B1n+1) ist wenigstens eine Federspeichereinheit (F) vorgesehen, welche von den stabförmigen Führungselementen (40.1 - 40.n) geführt und bei Erzeugung des Reibschlusses zwischen den reibflächentragenden Elementen (Bnn) und dem Zwischenelement (Bnz) vorspannbar ist.

14. Vorrichtung nach einem der Ansprüche 1 bis 13, **dadurch gekennzeichnet, daß** die stabförmigen Führungselemente als Vollprofilelement ausgeführt sind.

15. Vorrichtung nach einem der Ansprüche 1 bis 14, **dadurch gekennzeichnet, daß** die stabförmigen Führungselemente wenigstens teilweise als Hohlprofilelement ausgeführt sind.

16. Vorrichtung nach einem der Ansprüche 1 bis 15, **dadurch gekennzeichnet, daß** die stabförmigen Führungselemente als Achsen fungieren.

## Claims

1. Transmission constructional unit (1) comprising a transmission housing (11) and the following features: the transmission housing has a substantially cylindrical interior space (41) for the reception of individual transmission elements (B1, B2, B3, B4, K1, K2); at least two bar-shaped guide elements (40.1, 40.2, 40.3, 40.4) which extend, viewed in the axial direction, over at least a part of the axial extent of the cylindrical interior space (41), on which guide elements a large number of transmission elements (B1 to B4, 41, 42, 10, 7, 8) can be mounted stationarily with respect to the housing (11); the bar-shaped guide elements (40.1, 40.2, 40.3, 40.4) being arranged in recesses (60.1 to 60.4) in the transmission housing (11), which are connected to the interior space (41); **characterised by** the following features: the bar-shaped guide elements (40.1, 40.2, 40.3, 40.4) are associated with the cylindrical interior space (41) outside a region of the greatest (H5) dimension of the cylindrical interior space (41), viewed in the height direction in the fitted state; the transmission housing (11) has a substantially rectangular outer shape and the association of the bar-shaped guide element (40.1, 40.2, 40.3, 40.4) with the cylindrical interior space is in corner regions (54, 55, 56, 57) which are defined by the intersection between interior space (41) and a theoretically formable square (Qtheoretical) having a side dimension greater than or equal to the diameter (d) of the interior space (41), the theoretically formable square (Q_{theoretical}) and the interior space (41) having identical axes of symmetry (S).

2. Transmission constructional unit according to claim 1, **characterised in that** the bar-shaped guide elements (40.1, 40.2, 40.3, 40.4) are associated with the cylindrical interior space (41) in a region which is limited by the smallest and largest dimension of the cylindrical interior space, viewed in the height direction in the fitted state.

3. Transmission constructional unit according to claim 1 or 2, **characterised in that** the bar-shaped guide elements (40.1, 40.2, 40.3, 40.4) are arranged in all four corner regions (54, 55, 56, 57) and have substantially constant mutual spacing in the circumferential direction of the cylindrical interior space (41).

4. Transmission constructional unit according to any of claims 1 to 3, **characterised in that** the individual transmission elements (B1 to B4, K1 to K4, 10, 7, 8) guided on the bar-shaped guide elements (40.1, 40.2, 40.3, 40.4) have projections with passage openings for the reception of the bar-shaped elements and are configured in such manner that these elements are received by the recesses (60.1 to 60.4) in the transmission housing (11).

5. Transmission constructional unit according to any of claims 1 to 4, **characterised in that** means are provided which limit the movement of the transmission elements (B1, Bn, K1 to Kn, 10, 7, 8) in the axial direction.

6. Transmission constructional unit according to claim 5, **characterised in that** means comprise securing rings (64).

7. Transmission constructional unit according to either of claims 4 or 6, **characterised in that** the means comprise sleeve-shaped elements (65).

8. Transmission constructional unit according to any of claims 4 to 7, **characterised in that** the means comprise stop faces formed by the individual transmission elements.

9. Transmission constructional unit according to any of claims 1 to 8, **characterised in that** the internal diameter of the cylindrical interior space (41) is substantially constant.

10. Transmission constructional unit according to any of claims 1 to 8, **characterised by** the following features:
10.1 comprising a mechanical transmission part (4) and a hydrodynamic transmission part (2);
10.2 the cylindrical interior space (41) of the transmission housing (11) has a constant diameter (d), viewed in the axial direction, at least over the range of the mechanical transmission part (4).

11. Transmission constructional unit according to any of claims 1 to 9, **characterised by** the following features:
11.1 at least one transmission element is constructed as a partition (44, 45, 46, 62);
11.2 the bar-shaped guide elements (40.1 to 40.4) are mounted in the partitions (44, 45, 46, 62).

12. Transmission constructional unit according to any of claims 1 to 10, **characterised in that** the bar-shaped guide elements (40.1 to 40.4) are mounted such that they are suspended at least in the transmission housing (11).

13. Transmission constructional unit according to any of claims 1 to 12, **characterised by** the following features:
13.1 there is at least one transmission element in the form of a multiple disc braking device (B1 to B4), comprising at least two friction face-carrying elements (B1n to Bnn), the friction faces of which can be pressed onto one another via a further friction face-carrying intermediate element (Bz1 to Bzn);
13.2 at least one spring storage unit (F) is provided between two adjacent friction face-carrying elements (B1n, B1n+1), the spring storage unit being guided by the bar-shaped guide elements (40.1 to 40.n), and on generation of the frictional fit, the spring storage unit can be preloaded between the friction face-carrying elements (Bnn) and the intermediate element (Bnz).

14. Transmission constructional unit according to any of claims 1 to 13, **characterised in that** the bar-shaped guide elements are constructed as solid profile elements.

15. Transmission constructional unit according to any of claims 1 to 14, **characterised in that** the bar-shaped guide elements are at least partially constructed as hollow profile elements.

16. Transmission constructional unit according to any of claims 1 to 15, **characterised in that** the bar-shaped guide elements function as axles.

## Revendications

1. Unité de transmission (1)
avec un carter de transmission (11) et les particularités suivantes :
le carter de transmission présente un espace intérieur (41) sensiblement cylindrique pour la réception d'éléments individuels de transmission (B1, B2 , B3, B4, K1, K2) ;
il est prévu au moins deux éléments de guidage en forme de barres (40.1, 40.2, 40.3, 40.4) qui s'étendent, vu dans le sens axial, sur au moins une partie de l'étendue axiale de l'espace intérieur cylindrique (41), sur lesquels une pluralité d'éléments de transmission (B1-B4, 41, 42, 10, 7, 8) peut être logée fixement au carter (11) ; les éléments de guidage en forme de barres (40.1, 40.2, 40.3, 40.4) sont agencés dans des évidements (60.1-60.4) dans le carter de transmission (11), lesquels sont reliés avec l'espace intérieur (41);
**caractérisée par** les dispositions suivantes :
les éléments de guidage en forme de barres (40.1, 40.2, 40.3, 40.4) sont disposés à l'extérieur de l'espace intérieur cylindrique (41) mais en-deçà de la plus grande dimension (H5), vu dans le sens de la hauteur en position d'implantation dudit espace intérieur cylindrique (41) ;
le carter de transmission (11) présente une forme extérieure sensiblement rectangulaire et l'affectation des éléments de guidage en forme de barres (40.1, 40.2, 40.3, 40.4) par rapport à l'espace intérieur cylindrique est réalisée dans les zones d'angle (54, 55, 56, 57), laquelle forme peut être représentée par l'intersection de l'espace intérieur (41) et d'un carré théoriquement traçable (Q_{theorisch}) avec une longueur de côté supérieure ou égale au diamètre (d) de l'espace intérieur (41), le carré théoriquement traçable (Q_{theorisch}) et l'espace intérieur (41) présentant des axes de symétrie identiques (S).

2. Unité de transmission selon la revendication 1, **caractérisée en ce que** les éléments de guidage en forme de barres (40.1, 40.2, 40.3, 40.4) sont affectés à l'espace intérieur cylindrique (41) dans une zone qui est limitée en position de montage, vu dans le sens de la hauteur, par la plus petite et la plus grande mesure de l'espace intérieur cylindrique (41).

3. Unité de transmission selon la revendication 1 ou 2, **caractérisée en ce que** les éléments de guidage en forme de barres (40.1, 40.2, 40.3, 40.4) sont affectés dans les quatre zones d'angle (54, 55, 55, 57) avec une distance entre eux sensiblement constante dans le sens de la périphérie de l'espace intérieur cylindrique (41).

4. Unité de transmission selon l'une des revendications 1 à 3, **caractérisée en ce que** les éléments individuels de la transmission (B1-B4, K1-K4, 10, 7, 8) guidés sur les éléments de guidage en forme de barres (40.1, 40.2, 40.3, 40.4) présentent des saillies munies d'orifices de passage pour la réception des éléments en forme de barres et sont configurés de sorte que ces derniers soient reçus dans le carter de transmission (11) par les évidements (60.1 - 60.4).

5. Unité de transmission selon l'une des revendications 1 à 4, **caractérisée en ce qu'**il est prévu des moyens qui limitent la mobilité des éléments de transmission (B1-Bn, K1-Kn, 10, 7,8) dans le sens axial.

6. Unité de transmission selon la revendication 5, **caractérisée en ce que** les moyens comprennent des cerclips (64).

7. Unité de transmission selon la revendication 4 ou 6, **caractérisée en ce que** les moyens comprennent des éléments en forme de manchon (65).

8. Unité de transmission selon l'une des revendications 4 à 7, **caractérisée en ce que** les moyens comprennent des surfaces de butée (6) qui sont formées par des éléments individuels de la transmission.

9. Unité de transmission selon l'une des revendications 1 à 8, **caractérisée en ce que** le diamètre intérieur (d) de l'espace intérieur cylindrique (41) est sensiblement constant.

10. Unité de transmission selon l'une des revendications 1 à 8, **caractérisée par** les dispositions suivantes :
10.1 une partie transmission mécanique (4) et une partie transmission hydrodynamique (2) ;
10.2 l'espace intérieur cylindrique (41) du carter de transmission (11) présente, vu en sens axial, un diamètre constant (d) au moins sur l'étendue de la partie transmission mécanique (4).

11. Unité de transmission selon l'une des revendications 1 à 9, **caractérisée par** les dispositions suivantes :
11.1 au moins un élément de la transmission est réalisé sous forme de cloison (44, 45, 40, 62) ;
11.2 les éléments de guidage en forme de barres (40.1-40.4) sont logés dans les cloisons (44, 45, 40, 62).

12. Unité de transmission selon l'une des revendications 1 à 10, **caractérisée en ce que** les éléments de guidage en forme de barres (40.1-40.4) sont logés flottants au moins dans le carter de transmission (11).

13. Unité de transmission selon l'une des revendications 1 à 12, **caractérisée par** les dispositions suivantes :
13.1 au moins un élément de transmission sous forme de dispositif de freinage à disques (B1-B4) est présent, qui comporte au moins deux éléments dotés de surface de frottement (B1n-Bnn) dont les surfaces de frottement peuvent être mutuellement pressées via un autre élément intermédiaire (Bz1-Bzn) doté d'une surface de frottement;
13.2 entre au moins deux éléments contigus dotés d'une surface de frottement (B1n, B1n+1), il est prévu au moins une unité à ressort accumulateur (F) qui est guidée par les éléments de guidage en forme de barres (40.1-40.n) et peut être précontrainte lorsqu'une liaison par frottement est générée entre les éléments dotés d'une surface de frottement (Bnn) et l'élément intermédiaire (Bnz).

14. Dispositif selon l'une des revendications 1 à 13, **caractérisé en ce que** les éléments du guidage en forme de barres sont réalisés avec un profil plein.

15. Dispositif selon l'une des revendications 1 à 14, **caractérisé en ce que** les éléments de guidage en forme de barres sont au moins partiellement réalisés avec un profil creux.

16. Dispositif selon l'une des revendications 1 à 15, **caractérisé en ce que** les éléments de guidage en forme de barres servent d'axes.
